# EUROPÄISCHE PATENTSCHRIFT

(11) **EP 2 294 557 B1**
(45) Veröffentlichungstag und Bekanntmachung des Hinweises auf die Patenterteilung: **26.03.2014**
(21) Anmeldenummer: 09757606.0
(22) Anmeldetag: 04.06.2009
(51) Int. Cl.: G07C 5/08, G07C 9/00, B60R 25/24

(54) **MOBILER IDENTIFIKATIONSGEBER EINES SICHERHEITSSYSTEMS**
MOBILE IDENTIFICATION TRANSMITTER OF A SECURITY SYSTEM
TRANSMETTEUR D IDENTIFICATION MOBILE D UN SYSTÈME DE SÉCURITÉ

(30) Priorität: 04.06.2008 DE 102008026675; 14.08.2008 DE 102008037717
(43) Veröffentlichungstag der Anmeldung: 16.03.2011
(73) Patentinhaber: Huf Hülsbeck & Fürst GmbH & Co. KG, 42551 Velbert (DE)
(72) Erfinder: SIMON, Jörg, 42489 Wülfrath (DE); SCHUMACHER, Helmut, 48653 Coesfeld (DE)
(74) Vertreter: Patentanwälte Bals & Vogel
(86) Internationale Anmeldenummer: PCT/EP2009/056904
(87) Internationale Veröffentlichungsnummer: WO 2009/147225

(56) Entgegenhaltungen:
- WO-A1-00/12845
- DE-A1- 10 317 499
- DE-A1- 19 916 308
- DE-A1-102004 050 846
- US-A1- 2006 219 776
- US-A1- 2008 077 292

## Beschreibung

Die Erfindung betrifft einen mobilen Identifikationsgeber eines Sicherheitssystems für eine schlüssellose Aktivierung einer Schließvorrichtung eines Kraftfahrzeuges gemäß des Oberbegriffes des Anspruches 1, mit einem Gehäuse, in dem eine Elektronikeinheit mit wenigstens einer Sende- und Empfangseinheit angeordnet ist, die Sende- und Empfangseinheit mit einer kraftfahrzeugseitigen Verbindungseinheit über eine erste Kommunikationsverbindung mittels elektromagnetischer Wellen in Verbindung steht, mit Hilfe derer eine Identifikationsprüfung zur Feststellung einer Benutzerberechtigung durchführbar ist.

Mobile Identifikationsgeber werden bei zahlreichen Anwendungen bei Kraftfahrzeugen zur Erhöhung des Bedienerkomforts eingesetzt. So kann ein berechtigter Benutzer aktiv den Identifikationsgeber betätigen, um ein Signal zur Basisstation, beispielsweise an eine im Kraftfahrzeug vorgesehene Elektronikeinheit, zum Öffnen des Fahrzeuges übermitteln.

Um einen hohen Bedienungskomforts zu erreichen, weisen mobile Identifikationsgeber Sende- und Empfangseinheiten auf, die eine langreichweitige Verbindung mit kraftfahrzeugseitigen Verbindungseinheiten ermöglichen. Als nachteilig hat es sich dabei herausgestellt, dass weitere Funktionen des mobilen Identifikationsgebers auch über diese langreichweitigen Sende- und Empfangseinheiten übermittelt werden. Dieses führt dazu, dass auch sicherheitsrelevante Anweisungen an das Kraftfahrzeug über eine weite Distanz übermittelt werden können. Folglich akzeptiert das Kraftfahrzeug auch sicherheitsrelevante Anweisungen, die aus großer Entfernung abgesendet worden. Dadurch ist es möglich, dass sicherheitsrelevante Funktionen - wie etwa ein Deaktivieren eines Airbags - durch einen unbeabsichtigten Zufall ausgelöst werden können.

Ein mobiler Identifikationsgeber ist aus der DE 10 2004 050846 A1 bekannt, der nur eine Sende- und Empfangseinheit aufweist, deren Sendeleistung moduliert werden kann, um verschiedene Verbindungen mit unterschiedlichen Reichweiten herzustellen. Dabei hat sich als ein Nachteil herausgestellt, dass die Übertragung sicherheitsrelevanter Daten von der Übertragung der Identifikationsdaten nicht sicher getrennt werden kann, da beide Übertragungen durch eine Sende-/Empfangseinheit ausgeführt werden

Weitere Beispiele von mobilen ldentifikationsgebern sind aus den US 2006/0219776 A1 und WO 00/12845 A1 bekannt, die mehrere Sende- und Empfangseinheiten aufweisen, die jedoch nicht alternativ aktiviert werden können, sodass zwischen den Datenübertragungen mittels unterschiedlicher Sende- und Empfangseinheiten zu Interferenzen kommen kann. Außerdem ist es nachteilig, dass die Sende- und Empfangseinheiten nicht abgeschaltet werden können, sodass die Datenübertragungen nicht gegen Diebstähle gesichert sind und von Unbefugten leicht ausgenutzt werden können.

Aufgabe der vorliegenden Erfindung ist es, einen mobilen Identifikationsgeber bereitzustellen, welcher die oben genannten Nachteile überwindet, insbesondere einen mobilen Identifikationsgeber zu schaffen, mit dem eine erhöhte Sicherheit innerhalb des Betriebes erreichbar ist.

Diese Aufgabe wird durch einen mobilen Identifikationsgeber eines Sicherheitssystems für eine schlüssellose Aktivierung einer Schließvorrichtung eines Kraftfahrzeuges mit den Merkmalen des Anspruches 1 in vorteilhafter Weise gelöst. Weitere vorteilhafte Ausführungsformen der vorliegenden Vorrichtungen ergeben sich aus den jeweiligen Unteransprüchen. Dabei können die in den Ansprüchen und in der Beschreibung erwähnten Merkmale jeweils einzeln für sich oder in beliebiger Kombination erfindungswesentlich sein.

Der erfindungsgemäße mobile Identifikationsgeber zeichnet sich dadurch aus, dass die Elektronikeinheit ein Kommunikationsmittel aufweist, um einen Datentransfer über eine zweite Kommunikationsverbindung mittels elektromagnetischer Wellen mit einem externen Datengerät ausschließlich bis zu einer Reichweite von bis zu 10 cm zu ermöglichen, wobei das Kommunikationsmittel nach einem NFC Standard arbeitet, wobei der mobile Identifikationsgeber ein Schaltelement aufweist, und wobei mittels des Schaltelements alternativ die Sende- und Empfangseinheit oder das Kommunikationsmittel aktivierbar und/oder blockierbar sind.

Der Kern der Erfindung besteht darin, den mobilen Identifikationsgeber mit einem Kommunikationsmittel auszurüsten. Dieses Kommunikationsmittel ermöglicht einen Datentransfer bis zu einer Reichweite von weniger als 10 cm. Somit weist der mobile Ident'rfikationsgeber zwei Elemente auf, die zum Senden bzw. Empfangen von Informationen ausgelegt sind. Zum einen ist in dem mobilen Identffikationsgeber die Sende- und Empfangseinheit integriert, die dazu dient, eine Authentifizierung des mobilen Ident'rfikationsgebers gegenüber dem Fahrzeug zur erreichen. Zusätzlich ist das Kommunikationsmittel in dem mobilen Identifikationsgeber integriert. Über das Kommunikationsmittel können andere, auch sicherheitsrelevante Informationen im Rahmen eines Datentransfers mit einem externen Datengerät ausgetauscht werden. So ist es beispielhaft denkbar, dass das externe Datengerät in dem Kraftfahrzeug integriert ist und über das Kommunikationsmittel beispielhaft der Airbag aktiviert oder deaktiviert werden kann. Ausschlaggebend für die Überwindung der oben genannten Nachteile ist es, dass die Reichweite des Kommunikationsmittels klar begrenzt ist. Die erfindungsgemäße Reichweite, über die ein Datentransfer möglich ist, ist auf ca. 10 cm begrenzt. Weist der mobile Identifikationsgeber einen Abstand von dem externen Datengerät auf, der größer ist als 10 cm, so ist ein Datentransfer zwischen dem Kommunikationsmittel und dem externen Datengerät nicht mehr möglich. Folglich können auch Fehlbedienungen des mobilen Identifikationsgebers nicht zu sicherheitsrelevanten Zwischenfällen führen. Dieses Merkmal des mobilen Identifikationsgebers verhindert weiterhin ein unberechtigtes Abhören der über dem Datentransfer übermittelten Daten. So ist es einem unberechtigten Dritten nicht möglich, Informationen, die mittels des Kommunikationsmittels an das externe Datengerät übermittelt werden, abzuhören. Denn dazu müsste der unberechtigte Dritte innerhalb der Übertragungsreichweite von bis zu 10 cm an das Kommunikationsmittel heran gelangen.

In einer vorteilhaften Variante der Erfindung ist vorgesehen, dass das Kommunikationsmittel nach einem NFC Standard (Near Field Communication) arbeitet. Die NFC-Technologie ist eine kontaktlose, induktive Verbindungstechnologie. Sie arbeitet in einem Frequenzbereich von 13,56 MHz und bietet eine Datenübertragungsrate von maximal 424 kBit/s bei einer Reichweite von bis zu 10 Zentimetern. Die NFC-Technologie ist durch ISO (Internationale Organisation für Normung) 18092, 21481 ECMA 340, 352, 356, 362 beziehungsweise ETSI (Europäische Institut für Telekommunikationsnormen) TS 102 190 standardisiert. Die NFC-Technologie ist kompatibel mit verwendeter Smart Card-Infrastruktur basierend auf ISO/IEC 14443A (z. B. NXP's Mifare-Technologie) wie auch mit Sonys FeliCa-Card, die für elektronische Fahrkarten im öffentlichen Nahverkehr und für Zahlungsanwendungen genutzt werden.

Eine weitere vorteilhafte Ausgestaltung sieht vor, dass das Kommunikationsmittel ein Sendemittel und ein Empfangsmittel aufweist. Um dem Kommunikationsmittel eine Reichweite von weniger als 10 cm zu ermöglichen, weist das Kommunikationsmittel die Sende- und Empfangsmittel auf. Mittels des Sendemittels können vorzugsweise elektromagnetische Wellen ausgesandt werden, die von dem externen Datengerät empfangen werden. Das Empfangsmittel dient hingegen dazu, elektromagnetische Wellen zu empfangen und an eine Rechnereinheit innerhalb des Kommunikationsmittels weiterzuleiten. Die Rechnereinheit dient dazu, die im Rahmen des Datentransfers empfangenen Informationen auszuwerten und/oder darzustellen. Gleichfalls werden mittels der Rechnereinheit die Informationen derart verarbeitet, dass das Sendemittel diese übermitteln kann. Neben der besagten NFC-Technologie kann das Sendemittel und/oder Empfangsmittel auch noch eine der folgenden Technologien verwenden: USB-Interface (Universal Serial Bus), SPI (Serial Peripheral Interface), 12C (Inter-Integrated Circuit), UART (Universal Asynchronous Receiver Transmitter) serial link, wireless USB-Interface. Ausschlaggebend dabei ist, dass die Reichweite der genannten Technologien auf 10 cm begrenzt ist oder wird. Somit können Datentransfers nur innerhalb dieser Reichweite ermöglicht werden.

Eine weitere, die Erfindung verbessernde Maßnahme sieht vor, dass der Datentransfer ein uni- und/oder bidirektionales Empfangen und/oder Senden von Daten beinhaltet.

In einer vorteilhaften Variante der Erfindung ist vorgesehen, dass das Kommunikationsmittel
- einen energieabsorbierenden passiven Modus aufweist, wobei durch eine Dämpfung einer empfangenen Energie einen Datentransfer ausführbar ist, und
- einen energieemittierenden aktiven Modus aufweist, wobei eine Dämpfung einer vom Kommunikationsmittel emittierten Energie im externen Datengerät zu einem Datentransfer an das Kommunikationsmittel führt.

Im Rahmen des energieemittierenden aktiven Modus sendet das Sendemittel des Kommunikationsmittels ein hochfrequentes elektromagnetisches Wechselfeld aus, welches ein Empfangselement des externen Datengerätes beleuchtet. In einer Antennenspule des Empfangselementes entsteht - sobald diese in den Bereich des elektromagnetischen Feldes kommt - ein Induktionsstrom. Der Strom wird gleichgerichtet und genutzt um einen Kondensator als Kurzzeitspeicher aufzuladen, welcher im Rahmen des Datentransfers für die Stromversorgung des externen Datengerätes genutzt wird. Das so aktivierte externe Datengerät empfängt entweder über das elektromagnetische Wechselfeld oder ein parallel geschaltetes Informationsfeld einen Befehl des Kommunikationsmittels. Als besonders vorteilhaft hat es sich herausgestellt, wenn diese Befehle in das elektromagnetische Wechselfeld, welches von dem Sendemittel ausgesandt wird, einmoduliert werden. Das externe Datengerät nutzt den induzierten Strom um ein Rechnerelement zu betreiben, welches die Antwort auf die Anfrage des mobilen Identifikationsgebers generiert. Anschließend wird durch eine Feldschwächung im kontaktfreien Kurzschluss oder per Reflexion die Antwort auf das vom Kommunikationsmittel emittierten elektromagnetischen Feldes aufmoduliert. Im Rahmen dieser Antwort kann das externe Datengerät eine Mehrzahl von Informationen übermitteln. Somit ist das externe Datengerät passiv und weist keine eigene Energiequelle auf. Vielmehr nutzt das externe Datengerät die von dem Kommunikationsmittel übersandte Energie um den Datentransfer durchzuführen. Der Datentransfer ist in dem dargestellten Beispiel bidirektional. Denn das Kommunikationsmittel übersendet durch Modulation des elektromagnetischen Wechseffeldes eine Anfrage an das externe Datengerät. Auf Basis dieser Anfrage wird dann eine Antwort übermittelt.

Weiterhin weist das Kommunikationsmittel die Möglichkeit auf, den energieabsorbierenden passiven Modus zu nutzen. Dabei nutzt das Kommunikationsmittel ein elektromagnetisches Wechselfeld, welches von dem externen Datengerät in das Empfangsmittel eingestrahlt wird. Folglich sind das Verhalten des Kommunikationsmittels und des externen Datengerätes im aktiven Modus getauscht zu jenen im passiven Modus.

Eine weitere vorteilhafte Ausgestaltung sieht vor, dass das Kommunikationsmittel einen energleemittierenden Sendemodus aufweist, zum Empfangen und Senden von Daten. Der energieemittierende Sendemodus unterscheidet sich von dem passiven und aktiven Modus dadurch, dass das Empfangselement empfangene elektromagnetische Wellen nicht dazu nutzt, um einen Energievorrat für einen Datentransfer aufzubauen. Vielmehr werden aus den im Rahmen des Datentransfers empfangenen elektromagnetischen Wellen nur Informationen generiert. Parallel dazu wird das Sendemittel auch nur zur Übersendung von Informationen genutzt. Die abgestrahlten elektromagnetischen Wellen dienen nicht dazu, ein externes Datengerät mit Energie zu versorgen.

Eine weitere, die Erfindung verbessernde Maßnahme sieht vor, dass der Datentransfer mit dem externen Datengerät in dem passiven Modus und/oder dem aktiven Modus und/oder dem Sendemodus ausführbar ist.

In einer vorteilhaften Variante der Erfindung ist vorgesehen, dass das Kommunikationsmittel innerhalb eines Frequenzbereiches f arbeitet, der zwischen 10 MHz ≤ f ≤ 15 MHz liegt, insbesondere dass das Kommunikationsmittel innerhalb eines Frequenzbereiches f um 13.56 MHz arbeitet.

Eine weitere vorteilhafte Ausgestaltung sieht vor, dass die Sende- und Empfangseinheit mit der kraftfahrzeugseitigen Verbindungseinheit einen Informationstransfer bis zu einer Reichweite von bis zu 300 m, bevorzugt bis zu 200 m ermöglicht.

Eine weitere, die Erfindung verbessernde Maßnahme sieht vor, dass bei einer Aktivierung der Sende- und Empfangseinheit das Kommunikationsmittel blockiert ist. Erfindungsgemäß ist vorgesehen, dass das Kommunikationsmittel im Rahmen des Datentransfers keine Informationen an das externe Datengerät übermitteln kann, wenn die Sende- und Empfangseinheit aktiviert ist, Unter Aktivierung ist dabei zu verstehen, dass ein Nutzer des mobilen Identifikationsgebers einen entsprechenden Befehl an die Sende-und Empfangseinheit übermittelt hat, so dass diese in Verbindung mit der kraftfahrzeugseitigen Verbindungseinheit steht. Davon umfasst sind auch sämtliche Übermittlungen von Daten durch die Sende- und Empfangseinheit an Dritte Einrichtungen, wie etwa Werkstätten etc. Durch die Blockierung des Kommunikationsmittels ist sichergestellt, dass es keine Interferenzen zwischen den mittels der Sende- und Empfangseinheit ausgesandten Informationen und den vom Kommunikationsmittel ausgestrahlten Daten gibt. Die Blockierung des Kommunikationsmittels kann dabei auf mehrere Arten geschehen. So kann zum einen die Energieversorgung des Kommunikationsmittels für jenen Zeitraum unterbrochen werden, in dem die Sende- und Empfangseinheit aktiv ist. Denkbar ist es auch, dass ein Senden und/oder Empfangen von Informationen mittels der Sende- und Empfangseinheit dazu führt, dass ein entsprechendes Signal von einer Rechnereinheit der Elektronikeinheit generiert wird. Dieses Signal führt dazu, dass das Kommunikationsmittel keinen Datentransfer mit einem externen Datengerät akzeptiert und/oder auslöst.

In einer vorteilhaften Variante der Erfindung ist vorgesehen, dass bei einer Aktivierung des Kommunikationsmittels die Sende- und Empfangseinheit blockiert ist. Im Rahmen dieser Ausführungsvariante ist vorgesehen, dass die Sende- und Empfangseinheit keine Verbindung mit der fahrzeugseitigen Verbindungseinheit aufnehmen kann, wenn das Kommunikationsmittel im Datentransfer mit dem externen Datengerät besteht. Unter dem Ausdruck "blockiert" soll im Rahmen der Erfindung verstanden werden, dass es nicht möglich ist, mittels der Sende- und Empfangseinheit elektromagnetische Wellen auszustrahlen. Diese Blockierung kann durch verschiedene Vorgehensweisen erreicht werden. So kann eine Rechnereinheit innerhalb der Elektronikeinheit dafür sorgen, dass ein - wie auch immer gearteter - Aktivierungsbefehl nicht an die Sende- und Empfangseinheit weitergeleitet wird. Dazu kann ein entsprechendes Computerprogramm in der Rechnereinheit ablaufen. Denkbar ist es aber auch, dass bei einer Aktivierung des Kommunikationsmittels die Energieversorgung der Sende- und Empfangseinheit unterbrochen wird. Dadurch ist sichergestellt, dass trotz eines entsprechenden Befehles an die Sende- und Empfangseinheit diese keine elektromagnetischen Wellen aussenden kann.

Der mobile ID-Geber kann durch die Kombination der NFC-Technologie mit der bereits vorhandenen Funkfernbedienungs-HF-Technologie in seiner Funktion erweitert werden. So kann eine Umschaltung der Reichweite von Nah- auf Fern ist entsprechend der gewünschten Reichweite der Funktion vorgesehen sein. Der mobile ID-Geber kann einerseits die durch die NFC bedingte Reichweite von max. 10 Zentimetern im Nahfeld nutzen und damit eine unerwünschte Fehlbedienung ausschließen. Andererseits kann die Funkstrecke auch Funktionen bis zu einer Reichweite von mehreren Hundert Metern ermöglichen. So könnte z.B. die bewusste Abschaltung des Airbags durch die Nahfeld-Funktion aktiviert werden. Für eine Bezahlfunktion ist die Reichweitenbeschränkung ebenfalls wichtig. Andererseits können über die Nahfeld-Strecke übertragene Daten dem Fahrzeug über die Funkfernbedienungs-Übertragungsstrecke übermittelt werden.

Eine weitere vorteilhafte Ausgestaltung der Erfindung zeichnet sich dadurch aus, dass jeweils nur die Sende- und Empfangseinheit oder das Kommunikationsmittel zu einem Zeitpunkt genutzt werden können. Dadurch ist sichergestellt, dass keine Interferenzen zwischen dem Datentransfer des Kommunikationsmittels und der Verbindung der Sende-und Empfangseinheit auftreten. So kann der erfindungsgemäße mobile Identifikationsgeber entweder mit der fahrzeugseitigen Verbindungseinheit in Kontakt treten oder einen Datentransfer mit dem externen Datengerät ausführen. Diese Variante hat den Vorteil, dass insbesondere Datentransfers mit sicherheitsrelevanten Datengeräten nicht durch die Sende- und Empfangseinheit gestört werden können. Es bedarf vielmehr einer aktiven Auslösung des Kommunikationsmittels, die zu einer Deaktivierung und/oder Blockierung der Sende- und Empfangseinheit führt. Gleiches gilt auch im Gegenzug, wenn der Nutzer des mobilen Identifikationsgebers einen Steuerbefehl an das Sicherheitssystem der Schließvorrichtung des Kraftfahrzeuges übermittelt. Auch in diesem Falle ist sichergestellt, dass das Kommunikationsmittel keinen Datentransfer beginnt und/oder ausführt.

Eine weitere vorteilhafte Ausgestaltung sieht vor, dass der mobile Identifikationsgeber ein Schaltelement aufweist, wobei mittels des Schaltelements alternativ die Sende- und Empfangseinheit oder das Kommunikationsmittel aktivierbar und/oder blockierbar sind. Das Schaltelement sorgt dafür, dass zu einem Zeitpunkt immer nur die Sende- und Empfangseinheit oder das Kommunikationsmittel in Betrieb sind. Für die Ausgestaltung des Schaltelementes besteht eine Vielzahl von Möglichkeiten. So kann es sich bei dem Schaltelement um ein Computerprogramm handeln, welches auf der Rechnereinheit der Elektronikeinheit abläuft. Wird die Sende- und Empfangseinheit ausgelöst, so führt dieses zu einer Auslösung des Schaltelementes, also des Computerprogramms. Jenes Computerprogramm kann das Kommunikationsmittel blockieren und/oder eine Stromversorgung zu dem Kommunikationsmittel unterbrechen. Alternativ ist es auch möglich, dass das Schaltelement ein händisch zu bedienender Schalter ist, der von einem Nutzer aktiviert werden muss, um in Anschluss die Sende- und Empfangseinheit oder das Kommunikationsmittel zu bedienen. Somit kann die Verbindung zu dem Kraftfahrzeug oder der Datentransfer zu dem externen Datengerät nur dann aufgebaut werden, wenn der Nutzer im Vorhinein das Schaltelement betätigt hat. Eine weitere, die Erfindung verbessernde Maßnahme sieht vor, dass das Schaltelement in der Elektronikeinheit und/oder in dem Gehäuse und/oder an dem Gehäuse angeordnet ist.

In einer vorteilhaften Variante der Erfindung ist vorgesehen, dass der mobile Identifikationsgeber ein Display aufweist, wobei insbesondere mittels des Displays der Datentransfer und/oder eine Information, die den Datentransfer betrifft, anzeigbar sind.

Eine weitere vorteilhafte Ausgestaltung sieht vor, dass das Display mindestens eines der folgenden Mittel verwendet: eine Leuchtdiode (LEDs), eine Organische Leuchtdiode (OLEDs), eine Flüssigkristallanzeige (LCDs), einen Plasmabildschirm, eine Kathodenstrahlröhre, ein Surface-Conduction Electron-Emitter Display (SED) oder einen Feldemissionsbildschirm (FED).

Eine weitere, die Erfindung verbessernde Maßnahme sieht vor, dass die Elektronikeinheit und/oder die Sende- und Empfangseinheit und/oder das Kommunikationsmittel zumindest eine der folgenden Technologien aufweisen: Wireless LAN (IEEE 802.11), FireWire (IEEE 1394), USB (Universal Serial Bus), HDMI (High Definition Multimedia Interface), IrDA (Infrared Data Association), Bluetooth, Unilink, ATA/ATAPI (Advanced Technology Attachment with Packet Interface), IEEE 488, IEEE 1284, Bidirektionale Funkstrecke, Near Field Communication (NFC), induktive Übertragung, SPI, I2C, UART serial link oder wireless USB-Interface.

In einer vorteilhaften Variante der Erfindung ist vorgesehen, dass mittels des Kommunikationsmittels eine Datenverbinduhg zum Internet aufbaubar ist. Erfindungsgemäß können im Rahmen des Datentransfers eine Vielzahl von Informationen an ein externes Datengerät gesandt werden oder von diesem empfangen werden. So kann das Kommunikationsmittel beispielhaft dazu genutzt werden, um Authentifizierungsinformationen für ein Bezahlgerät zu übermitteln. Das Bezahlgerät kann z. B. dazu dienen, eine Fahrkarte für einen Nahverkehrsmittel auszugeben. Ein Nutzer des mobilen Identifikationsgebers kann sich folglich in die direkte örtliche Nähe zu dem Bezahlgerät begeben, eine entsprechende Aktivierung auslösen und dadurch eine Fahrkarte erwerben. Denkbar ist es auch, dass sicherheitsrelevante Systeme - wie ein Zu- und/oder Abschalten eines Airbags oder ESP - durch den Datentransfer ausgelöst werden. Weitere mögliche Funktionen, die mittels des Kommunikationsmittels ausgeführt werden, sind:
- Übertragung von MP3 Musikdaten von einem NFC-Gerät (z.B. Handy, MP3-Player) zu einem Fahrzeug Infotainment-Gerät,
- Aktivierung eines Parkplatzzugangssystems, Sperrung eines Handschuhkastens oder eines Kofferraumes, und
- ein GPS-Datentransfer von dem Fahrzeug in den mobilen Identifikationsgeber, sowie gegebenenfalls in ein GPS-Handy.

Im Rahmen einer weiteren Ausführungsvariante ist es möglich, dass Positionsangaben von einem satellitengestützten Navigationssystem - z. B. GPS (Global Positioning System) - über das Kommunikationsmittel auf den mobilen Identifikationsgeber übertragen werden. Dort ist eine Speicherung dieser Positionsangaben möglich, die gegebenenfalls auf dem Display angezeigt werden können. Diese Eigenschaft hat sich insbesondere dann als vorteilhaft erwiesen, wenn der Standort des Kraftfahrzeugs ermittelt werden soll. Um diese Funktion sicherzustellen, wird der mobile Identifikationsgeber an ein GPS-Datengerät, wie es beispielhaft in Kraftfahrzeugen integriert ist, angenähert, so dass über das Kommunikationsmittel im Rahmen des Datentransfers die Positionsangaben übermittelt werden können. Neben der beschriebenen Eigenschaft kann der mobile Identifikationsgeber auch von einem zweiten, nicht in dem Fahrzeug integrierten GPS-Datengerät Positionsangaben empfangen. So kann beispielhaft in ein Mobiltelefon ein GPS-System eingebaut sein. Über das erfindungsgemäß beschriebene Kommunikationsmittel ist ein Datenaustausch mit dem Mobiltelefon möglich. Im Rahmen dieses Datenaustausches können GPS-Positionsangaben von dem Mobiltelefon an den mobilen Identifikationsgeber übertragen werden. Durch einen Vergleich des mit dem Mobiltelefon ermittelten aktuellen Standortes und des Standorts des Kraftfahrzeugs kann der Besitzer des mobilen Identifikationsgebers zu dem Kraftfahrzeug geführt werden. Dieses ermöglicht ein schnelles und unkompliziertes Auffinden des Kraftfahrzeugs an beliebigen Orten.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Ansicht des erfindungsgemäßen Sicherheitssystems mit einem mobilen Identifikationsgeber und einer Schließvorrichtung eines Kraftfahrzeuges,
- Fig. 2: den erfindungsgemäßen mobilen Identifikationsgeber in einem Datentransfer mit einem externen Datengerät,
- Fig. 3: eine weitere Ausführungsvariante des Datentransfers zwischen dem mobilen Identifikationsgeber und dem externen Datengerät,
- Fig. 4: eine weitere Ausführungsvariante des Datentransfers zwischen dem mobilen Identifikationsgeber und dem externen Datengerät und
- Fig. 5: eine weitere Ausführungsvariante des Datentransfers zwischen dem mobilen Identifikationsgeber und dem externen Datengerät.

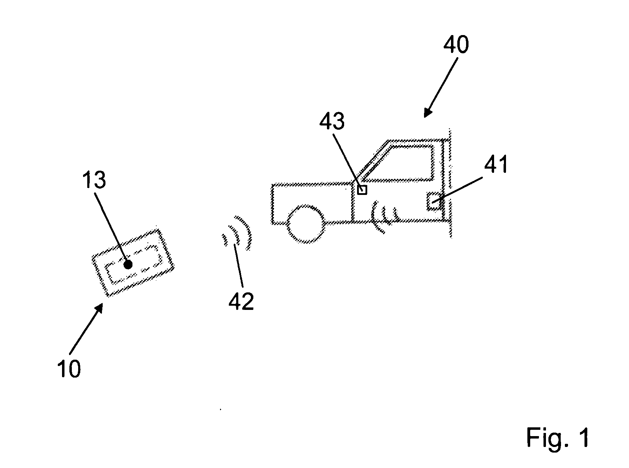

In Fig. 1 ist ein mobiler Identifikationsgeber 10 eines Sicherheitssystems für eine schlüssellose Aktivierung einer Schließvorrichtung 43 eines Kraftfahrzeuges 40 dargestellt. Der Identifikationsgeber 10 ist mit einem Gehäuse ausgeführt, in dem eine Elektronikeinheit 12 mit einer Sende- und Empfangseinheit 13 angeordnet ist. Der mobile Identifikationsgeber 10 kann über die Sende- und Empfangseinheit 13 eine Verbindung 42 - im Folgenden auch Kommunikation - mit einer fahrzeugseitigen Verbindungseinheit 41 aufbauen. Über die Kommunikation 42 werden dabei sicherheitsrelevante Informationen ausgetauscht, die zur Authentifizierung des mobilen Identifikationsgebers 10 dient. Im Rahmen der Verbindung 42 können insbesondere Codes und/oder Schlüssel uni und/oder bidirektional übertragen werden. Ziel ist es, dass das Kraftfahrzeug 40 die Berechtigung des mobilen Identifikationsgebers 10 überprüft. Sobald festgestellt ist, dass der mobile Identifikationsgeber 10 berechtigt ist, ein Ver- und/oder Entriegeln an dem Kraftfahrzeug auszulösen, wird ein entsprechendes Signal an die Schließvorrichtung 43 übermittelt, um damit ein Öffnen bzw. Verschließen des Kraftfahrzeuges auszulösen.

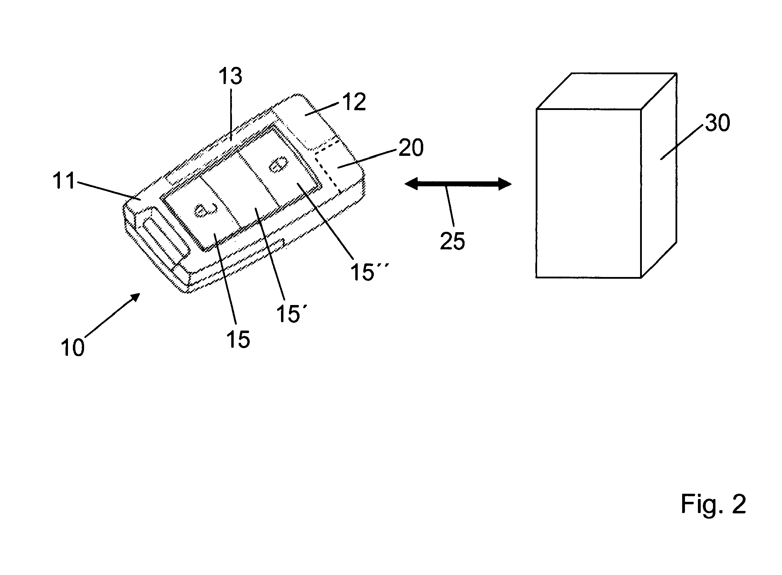

Ein erfindungsgemäß ausgestalteter mobiler Identifikationsgeber 10 ist in Figur 2 dargestellt. Der mobile Identifikationsgeber 10 weist ein Gehäuse 11 auf. Innerhalb des Gehäuses 11 ist eine Elektronikeinheit 12 integriert. Die Elektronikeinheit 12 dient zur Überwachung der mit dem mobilen Identifikationsgeber 10 gesteuerten Informationen. Um dieses sicherzustellen, hat es sich als vorteilhaft herausgestellt, wenn der mobile Identifikationsgeber 10 einen Datenspeicher aufweist. Dieser Datenspeicher kann in der Elektronikeinheit 12 integriert sein. Um eine entsprechende Versorgung mit Energie sicherzustellen, weist der mobile Identifikationsgeber 10 auch einen Energiespeicher auf. Dabei hat es sich als vorteilhaft herausgestellt, wenn es sich dabei um einen wiederaufladbaren Energiespeicher handelt. Des Weiteren ist in die Elektronikeinheit 12 eine Rechnereinheit integriert. Auf der Rechnereinheit kann ein Computerprogramm laufen. Bei der Rechnereinheit handelt es sich vorzugsweise um ein FPGA (Field Programmable Gate Array), einen Mikrocontroller oder einen andersartig ausgestalteten integrierten Schaltkreis.

Wie die Figur 2 verdeutlicht, ist ein Teil der Elektronikeinheit 12 die Sende- und Empfangseinheit 13. Sie dient zum Aufbau der Kommunikation 42 mit dem Kraftfahrzeug 40. In dem dargestellten Ausführungsbeispiel ist die Sende- und Empfangseinheit 13 an einer der Seitenflächen des Gehäuses 11 angeordnet. Um die oben aufgeführten Nachteile zu überwinden, weist die Elektronikeinheit 12 ein Kommunikationsmittel 20 auf. Dieses ist ebenfalls in dem Gehäuse 11 des mobilen Identifikationsgebers 10 angeordnet. Das Kommunikationsmittel 20 ermöglicht einen Datentransfer 25 an ein externes Datengerät 30 ausschließlich bis zu einer Reichweite von bis zu 10 cm. Um diesen Datentransfer 25 zu ermöglichen, kann das Kommunikationsmittel 20 über ein Sendemittel 21 und ein Empfangsmittel 22 verfügen.

Um den Datentransfer 25 auszulösen, hat es sich als vorteilhaft erwiesen, wenn der mobile Identifikationsgeber 10 ein entsprechend ausgestaltetes Betätigungselement aufweist. In dem dargestellten Ausführungsbeispiel sind in das Gehäuse 11 des mobilen Identifikationsgebers 10 drei Betätigungselemente 15, 15', 15" integriert. Die Betätigungselemente 15, 15" dienen zum Auslösen einer schlüssellosen Aktivierung der Schließvorrichtung 43 des Kraftfahrzeuges 40. Entsprechend ausgestaltete Piktogramme dienen zur Verdeutlichung der Funktion. An dem Betätigungselement 15 ist eine Entriegelung der Schließvorrichtung 43 auslösbar. Ein entsprechender Befehl wird von der Elektronikeinheit 12 generiert und über die Sende- und Empfangseinheit 13 an das Kraftfahrzeug 40 übermittelt. Möchte ein Benutzer im Gegenzug das Kraftfahrzeug 40 verriegeln, genügt eine Betätigung des Betätigungselementes 15". Befindet sich der Benutzer in einer örtlichen Nähe zu dem externen Datengerät 30, wird durch eine Betätigung des Betätigungselementes 15' eine Datentransfer 25 ausgelöst. Zusätzlich kann in dem Gehäuse 11 des mobilen Identifikationsgebers 10 noch ein Display integriert sein. In dem in Figur 2 gezeigten Ausführungsbeispiel ist dieses nicht eingezeichnet. Das Display kann dazu dienen, Daten, die an und/oder von dem mobilen Identifikationsgeber 10 übermittelt werden, visuell darzustellen. Als vorteilhaft hat es sich herausgestellt, wenn es sich bei dem Display um eine Flüssigkristallanzeige und/oder einem Plasmabildschirm handelt.

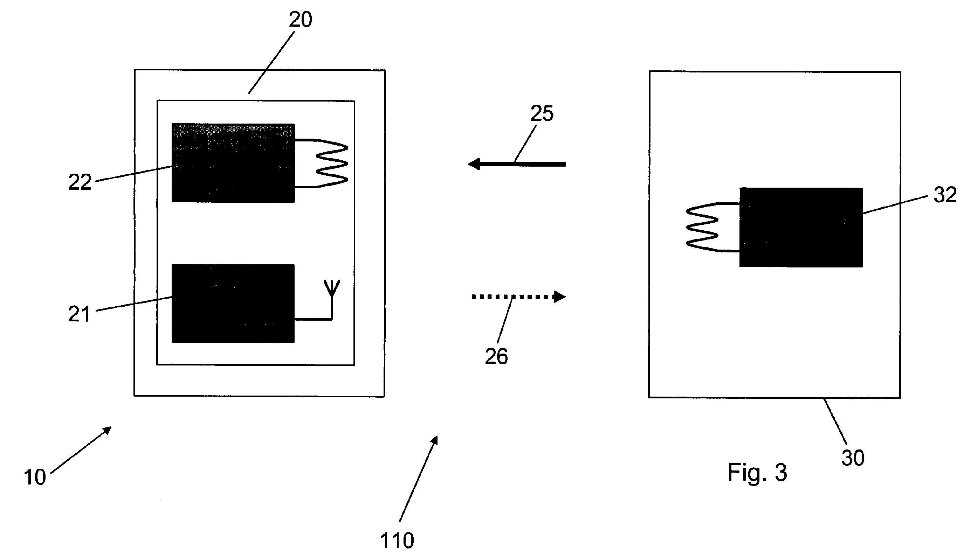

In Figur 3 ist eine schematische Darstellung des mobilen Identifikationsgebers 10 dargestellt. Innerhalb des mobilen Identifikationsgebers 10 ist das Kommunikationsmittel 20 angeordnet. Dieses Kommunikationsmittel 20 weist ein Sendemittel 21 und ein Empfangsmittel 22 auf. In örtlicher Nähe, also innerhalb einer Reichweite von weniger als 10 cm, ist das externe Datengerät 30 angeordnet. Bei dem externen Datengerät kann es sich beispielhaft um einen Informationschip, wie etwa ein RFID Chip handeln. Auf solcher Art ausgestalteten externen Datengeräten 30 können Informationen wie Seriennummern etc. gespeichert werden. Erfindungsgemäß kann das Kommunikationsmittel 20 in verschiedenen Modi eingesetzt werden. In Figur 3 ist ein energieemittierender aktiver Modus 110 aufgezeichnet. Dabei erzeugt das Sendemittel 21 des Kommunikationsmittels 20 ein hochfrequentes elektromagnetisches Wechselfeld, welches das Empfangselement 32 des externen Datengerätes 30 beleuchtet. In einer Antennenspule des Empfangselementes 32 entsteht ein Induktionsstrom. Dieser Induktionsstrom kann genutzt werden, um ein Rechnerelement innerhalb des externen Datengerätes zu betreiben. Das so aktivierte Rechnerelement kann von dem Kommunikationsmittel 20 Befehle und/oder Informationen empfangen. Diese Befehle und/oder Informationen werden in dem Rechnerelement verarbeitet, welches daraus eine Antwort erzeugt. Diese Antwort wird im Rahmen eines Datentransfers 25 von dem Empfangselement 32 an das Kommunikationsmittel 20 übersandt. Als Empfänger dient dabei das Empfangsmittel 22. Die Antwort wird dadurch erzeugt, dass das Empfangselement 32 den vom Sendemittel 21 im Rahmen eines Energietransfers 26 abgestrahlte elektromagnetische Wechselfeld schwächt. Diese Schwächung ist charakteristisch und beinhaltet die Antwort des externen Datengerätes 30. Im Rahmen des aktiven Modus 110 übermittelt somit das Kommunikationsmittel 20 jene Energie, die das externe Datengerät 30 nutzt, um einen Datentransfer 25 aufzubauen. Der aktive Modus 110 hat sich insbesondere dann als vorteilhaft herausgestellt, wenn vorgegebene Informationen mittels des Kommunikationsmittels 20 ausgelesen werden sollen. In diesem Fall handelt es sich bei dem Datengerät 30 häufig um nicht-aktive Systeme, deren Aufgabe darin besteht, im Vorhinein festgelegte Informationen - wie etwa Seriennummern etc. - für ein Auslesen bereitzustellen.

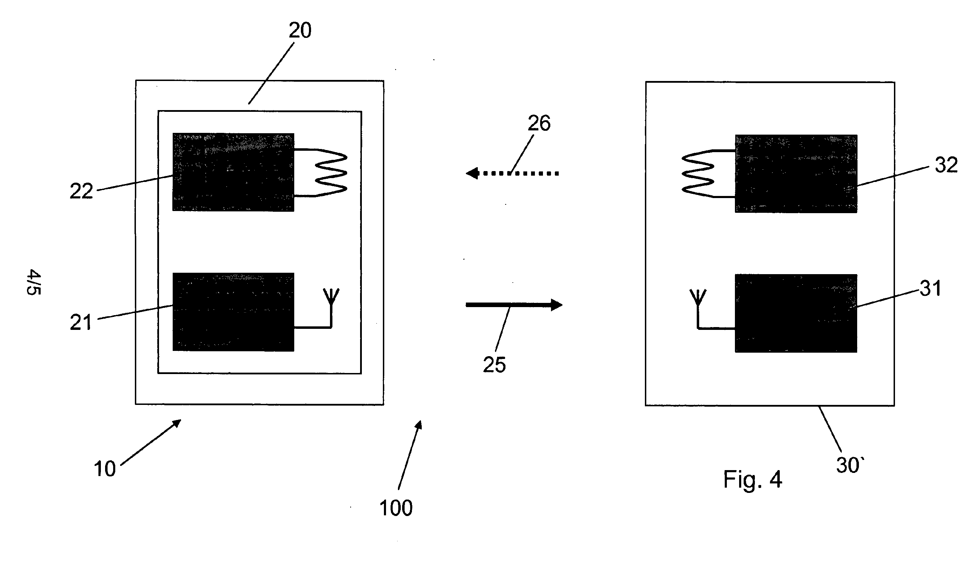

In Figur 4 ist eine weitere Ausführungsvariante des erfindungsgemäßen Identifikationsgebers 10 dargestellt. Der hier Identifikationsgeber 10 wird in einem passiven Modus 100 betrieben. Dieser passive Modus 100 zeichnet sich dadurch aus, dass ein Energietransfer 26 von dem externen Datengerät 30' stattfindet. Im Vergleich zu dem in Figur 3 dargestellten aktiven Modus 110 überträgt der mobile Identifikationsgeber 10 nicht die Energie, sondern empfängt diese von dem externen Datengerät 30'. Folglich muss in dem externen Datengerät 30' ein Sendeelement 31 angeordnet sein, welches ein hochfrequentes elektromagnetisches Wechselfeld aussendet, um den Energietransfer 26 zu ermöglichen. Erfindungsgemäß ist vorgesehen, dass das Kommunikationsmittel 20 diesen Energietransfer 26 erkennt und nutzt. Folglich schaltet sich das Kommunikationsmittel 20 in dem passiven Modus 100. Dabei moduliert das Empfangsmittel 22 die Feldstärke des vom Sendeelement 31 im Rahmen des Energietransfers 26 ausgestrahlten hochfrequenten elektromagnetischen Wechselfeldes. Diese schon im Rahmen des aktiven Modus 110 beschriebene Dämpfung des elektromagnetischen Feldes wird im passiven Modus 100 genutzt, um Informationen aus dem Kommunikationsmittel 20 auszulesen.

Der passive Modus 100 und der aktive Modus 110 unterscheiden sich folglich durch die Richtung des Energietransfers 26. Findet dieser von dem Kommunikationsmittel 20 an ein externes Gerät 30 statt, handelt es sich um einen aktiven Modus 110. Strahlt hingegen das externe Datengerät 30' Energie auf das Kommunikationsmittel 20, nutzt dieses den passiven Modus 100.

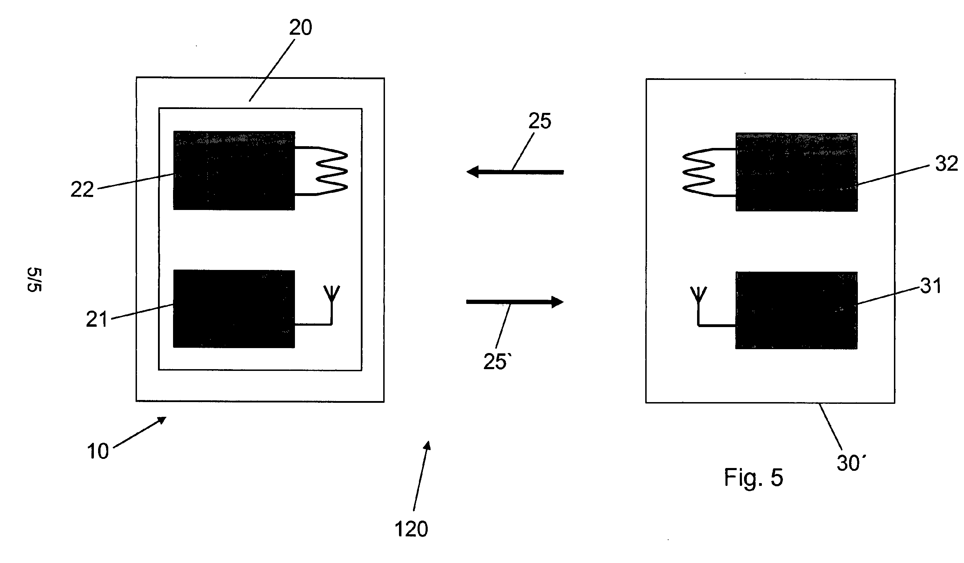

Neben den beschrieben beiden Modi, kann in einem dritten Modus - dem sogenannten Sendemodus 120 - ein Datentransfer 25, 25' zwischen dem Kommunikationsmittel 20 und einem externen Datengerät 30' stattfinden. Dieser Sendemodus 120 ist in der Figur 5 dargestellt. Im Rahmen des Sendemodus 120 findet insofern kein Energietransfer 26 statt, als die jeweils übermittelten elektromagnetischen Wellen ausschließlich für den Informationsfluss genutzt werden. So sendet das Sendemittel 21 des Kommunikations-mittels 20 eine beispielhaft amplituden- oder frequenzmodulierte elektromagnetische Welle 25' an das Sendeelement 31 des externen Datengerätes 30'. Innerhalb des externen Datengerätes 30' kann ein Rechnerelement die empfangene Information auswerten und abgefragte Daten und/oder Informationen für ein Übermitteln an das Kommunikationsmittel 20 bereitstellen. Für die Übermittlung wird dazu das Sendeelement 31 genutzt, was wiederum elektromagnetische Wellen moduliert und diese im Rahmen des Datentransfers 25 an das Kommunikationsmittel 20 übermittelt. Das Empfangsmittel 22 des Kommunikationsmittels 20 empfängt die so ausgesandten Daten im Rahmen des Datentransfers 25 und stellt diese der Rechnereinheit innerhalb des mobilen Identifikationsgebers 10 zur Verfügung.

Der erfindungsgemäße mobile Identifikationsgeber 10 weist somit drei Modi auf: den aktiven, den passiven und den Sendemodus. Erfindungsgemäß ist vorgesehen, dass der mobile Identifikationsgeber 10 derart ausgestaltet ist, dass das Kommunikationsmittel 20 jederzeit in einem der drei Modi aktiviert werden kann. In einer Variante bedarf es keiner Auswahl durch den Nutzer. Vielmehr ist das Kommunikationsmittel 20 derart ausgelegt, dass es auf äußere Bedingungen reagiert. So kann in etwa zeitgleichen Abständen der aktive Modus 110 eingeschaltet werden und das Kommunikationselement 20 einen Energietransfer 26 vornehmen. Dieses kann unabhängig davon geschehen, ob ein externes Datengerät 30, 30' in einem Abstand von weniger als 10 cm bei dem mobilen Identifikationsgeber 10 angeordnet ist. In einer anderen Variante ist es auch möglich, dass es einer Betätigung des Betätigungselementes 15' bedarf, um den aktiven Modus 110 mit dem Energietransfer 26 auszulösen. Die drei Modi erlauben es dem Kommunikationsmittel 20 und damit dem mobilen Identifikationsgeber 10 mit einer Vielzahl von unterschiedlich ausgestalteten externen Datengeräten 30, 30' in Kontakt zu treten. Dadurch ist sichergestellt, dass der mobile Identifikationsgeber 10 für eine Vielzahl von Anwendungen genutzt werden kann.

In einer weiteren vorteilhaften Ausführungsvariante ist vorgesehen, dass der mobile Identifikationsgeber 10 entweder den Datentransfer 25, 25' oder die Kommunikation 42 mit dem Kraftfahrzeug 40 ausführen kann. Dadurch soll verhindert werden, dass Interferenzen zwischen den beiden elektromagnetischen Signalen entstehen. Als vorteilhaft hat sich herausgestellt, wenn bei einer Aktivierung der Sende- und Empfangseinheit 13 das Kommunikationsmittel blockiert ist und wenn bei einer Aktivierung des Kommunikationsmittels die Sende- und Empfangseinheit 13 blockiert ist. Betätigt beispielsweise ein Fahrzeugnutzer das Betätigungselement 15' des in Figur 2 gezeigten mobilen Identifikationsgebers 10, kann dieses zu einer Aktivierung des Kommunikationsmittels 20 führen. Befindet sich ein externes Datengerät 30 innerhalb einer Reichweite von bis zu 10 cm, findet der Datentransfer 25 statt. Würde zu diesem Zeitpunkt der Fahrzeugnutzer auch das Betätigungselement 15, 15" drücken, könnte ein Computerprogramm innerhalb der Rechnereinheit des mobilen Identifikationsgebers 10 verhindern, dass eine Kommunikation 42 zu dem Fahrzeug 40 aufgebaut wird. Dazu könnte beispielhaft die Energieversorgung der Sende- und Empfangseinheit 13 unterbrochen werden. Möchte im Gegenzug der Fahrzeugempfänger sich gegenüber seinem Kraftfahrzeug authentifizieren und betätigt dazu eines der beiden Betätigungselemente 15, 15", würde dieses in einer Kommunikation 42 mit dem Fahrzeug 40 resultieren. Während dieser Zeit wäre es nicht möglich, einen Datentransfer 25 mit dem externen Datengerät 30 aufzubauen. Diese Variante weist eine erhöhte Sicherheit für den Nutzer auf, da keinerlei Interferenzen zwischen dem Datentransfer 25 und der Kommunikation 42 auftreten können.

Der erfindungsgemäße Identffikationsgeber 10 ermöglicht einen Datentransfer 25 innerhalb eines Nahbereiches von bis zu 10 cm. Dadurch ergeben sich eine Vielzahl von Vorteilen. So ist ein Abhören der im Rahmen des Datentransfers 25 übermittelten Daten nahezu unmöglich. Weiterhin bedarf es der willentlichen Aktivierung des Datentransfers 25, der nicht zufällig auftreten kann. Vielmehr muss der mobile Identifikationsgeber 10 immer in dem Empfangsbereich des externen Datengerätes 30 gebracht werden, der nicht mehr als 10 cm beträgt.

### Bezugszeichenliste

- 10: Mobiler Identifikationsgeber
- 11: Gehäuse
- 12: Elektronikeinheit
- 13: Sende- und Empfangseinheit
- 15,15',15": Betätigungselement

- 20: Kommunikationsmittel
- 21: Sendemittel
- 22: Empfangsmittel
- 25,25': Datentransfer
- 26: Energietransfer

- 30, 30': externes Datengerät
- 31: Sendeelement
- 32: Empfangselement

- 40: Kraftfahrzeug
- 41: Verbindungseinheit
- 42: Verbindung, Kommunikation
- 43: Schließvorrichtung

- 100: passiver Modus
- 110: aktiver Modus
- 120: Sendemodus

## Patentansprüche

1. Mobiler ldentifikationsgeber (10) eines Sicherheitssystems für eine schlüssellose Aktivierung einer Schließvorrichtung (43) eines Kraftfahrzeuges (40), mit
einem Gehäuse (11), in dem eine Elektronikeinheit (12) mit wenigstens einer Sende-und Empfangseinheit (13) angeordnet ist,
die Sende- und Empfangseinheit (13) mit einer kraftfahrzeugseitigen Verbindungseinheit über eine erste Kommunikationsverbindung (42) mittels elektromagnetischer Wellen in Verbindung steht, mit Hilfe derer eine Identifikationsprüfung zur Feststellung einer Benutzerberechtigung durchführbar ist,
wobei die Elektronikeinheit (12) ein Kommunikationsmittel (20) aufweist,
um einen Datentransfer über eine zweite Kommunikationsverbindung (25, 25') mittels elektromagnetischer Wellen mit einem externen Datengerät (30,30') ausschließlich bis zu einer Reichweite von bis zu 10 cm zu ermöglichen,
wobei das Kommunikationsmittel (20) nach einem NFC Standard arbeitet, **dadurch gekennzeichnet,**
**dass** der mobile Identitikationsgeber (10) ein Schaltelement aufweist, wobei mittels des Schaltelements alternativ die Sende- und Empfangseinheit (13) oder das Kommunikationsmittel (20) aktivierbar und/oder blockierbar sind.

2. Mobiler Identifikationsgeber (10) nach Anspruch 1,
**dadurch gekennzeichnet,**
**dass** das Kommunikationsmittel (20) ein Sendemittel (21) und ein Empfangsmittel (22) aufweist.

3. Mobiler Identifikationsgeber (10), nach einem der vorhergehenden Ansprüche,
**dadurch gekennzeichnet,**
**dass** der Datentransfer (25,25') ein uni- und/oder bidirektionales Empfangen und/oder Senden von Daten beinhaltet.

4. Mobiler Identifikationsgeber (10) nach einem der vorhergehenden Ansprüche,
**dadurch gekennzeichnet,**
**dass** das Kommunikationsmittel (20)
- einen energieabsorbierenden passiven Modus (100) aufweist, wobei durch eine Dämpfung einer empfangenen Energie einen Datentransfer (25,25') ausführbar ist, und
- einen energieemittierenden aktiven Modus (110) aufweist, wobei eine Dämpfung einer vom Kommunikationsmittel (20) emittierten Energie im externen Datengerät (30,30') zu einem Datentransfer (25,25') an das Kommunikationsmittel (20) führt.

5. Mobiler Identifikationsgeber (10) nach einem der vorhergehenden Ansprüche,
**dadurch gekennzeichnet,**
**dass** das Kommunikationsmittel (20) einen energieemittierenden Sendemodus (120) aufweist, zum Empfangen und Senden von Daten.

6. Mobiler Identifikationsgeber (10) nach Anspruch 4 oder 5,
**dadurch gekennzeichnet,**
**dass** der Datentransfer (25,25') mit dem externen Datengerät (30,30') in dem passiven Modus (100) und/oder dem aktiven Modus (110) und/oder dem Sendemodus ausführbar ist.

7. Mobiler Identifikationsgeber (10) nach einem der vorhergehenden Ansprüche,
**dadurch gekennzeichnet,**
**dass** das Kommunikationsmittel (20) innerhalb eines Frequenzbereiches f arbeitet, der zwischen 10 MHz ≤ f ≤ 15 MHz liegt, insbesondere dass das Kommunikationsmittel (20) innerhalb eines Frequenzbereiches f um 13.56 MHz arbeitet.

8. Mobiler Identifikationsgeber (10) nach einem der vorhergehenden Ansprüche,
**dadurch gekennzeichnet,**
**dass** die Sende- und Empfangseinheit (13) mit der kraftfahrzeugseitigen Verbindungseinheit (42) einen Informationstransfer bis zu einer Reichweite von bis zu 300 m, bevorzugt bis zu 200 m ermöglicht.

9. Mobiler Identitikationsgeber (10) nach einem der vorhergehenden Ansprüche,
**dadurch gekennzeichnet,**
**dass** bei einer Aktivierung der Sende- und Empfangseinheit (13) das Kommunikationsmittel (20) blockiert ist und/oder
**dass** bei einer Aktivierung des Kommunikationsmittels (20) die Sende- und Empfangseinheit (13) blockiert ist.

10. Mobiler Identifikationsgeber (10) nach einem der vorhergehenden Ansprüche,
**dadurch gekennzeichnet,**
**dass** das Schaltelement in der Elektronikeinheit (12) und/oder in dem Gehäuse (11) und/oder an dem Gehäuse (11) angeordnet ist.

11. Mobiler identifikationsgeber (10) nach einem der vorhergehenden Ansprüche,
**dadurch gekennzeichnet,**
**dass** der mobile Identifikationsgeber (10) ein Display aufweist, wobei insbesondere mittels des Displays der Datentransfer (25,25') und/oder eine Information, die den Datentransfer (25,25') betrifft, anzeigbar sind, wobei insbesondere
das Display mindestens eines der folgenden Mittel verwendet: eine Leuchtdiode (LEDs), eine Organische Leuchtdiode (OLEDs), eine Flüssigkristallanzeige (LCDs), einen Plasmabildschirm, eine Kathodenstrahlröhre, ein Surface-Conduction Electron-Emitter Display (SED) oder einen Feldemissionsbildschirm (FED).

12. Mobiler Identifikationsgeber (10) nach einem der vorhergehenden Ansprüche,
**dadurch gekennzeichnet,**
**dass** die Elektronikeinheit (12) und/oder die Sende- und Empfangseinheit (13) und/oder das Kommunikationsmittel (20) zumindest eine der folgenden Technologien aufweisen: Wireless LAN (IEEE 802.11), FireWire (IEEE 1394), USB (Universal Serial Bus), IrDA (Infrared Data Association), Bluetooth, Unilink, Bidirektionale Funkstrecke, Near Field Communication (NFC), induktive Übertragung, SPI, I2C, UART serial link oder wireless USB-Interface.

13. Mobiler Identifikationsgeber (10) nach einem der vorhergehenden Ansprüche,
**dadurch gekennzeichnet,**
**dass** mittels des Kommunikationsmittels (20) eine Datenverbindung zum Internet aufbaubar ist.

## Claims

1. A mobile identification transmitter (10) of a security system for keyless activation of a locking mechanism (43) of a motor vehicle (40), comprising
a housing (11), in which an electronic unit (12) having at least one transmitting and receiving unit (13) is disposed,
the transmitting and receiving unit (13) is connected via a first communication link (42) by electromagnetic waves to a connection unit in the motor vehicle, and with which an identification test can be performed for establishing the authorization of the user, wherein the electronic unit (12) comprises a communication means (20) to enable transfer of data to an external data device (30, 30') via a second communication link (25, 25') by electromagnetic waves only up to a range of up to 10 cm,
wherein the communication means (20) functions according to an NFC standard,
**characterized in that**
the mobile identification transmitter (10) comprises a switching element, wherein the transmitting and receiving unit (13) or the communication means (20) can be activated and/or blocked alternatively by means of the switching element.

2. The mobile identification transmitter (10) according to claim 1,
**characterized in that**
the communication means (20) comprises a transmitting means (21) and a receiving means (22).

3. The mobile identification transmitter (10) according to one of the preceding claims,
**characterized in that**
the data transfer (25, 25') comprises unidirectional and/or bidirectional receiving and/or transmission of data.

4. The mobile identification transmitter (10) according to one of the preceding claims,
**characterized in that**
the communication means (20) comprises
- an energy absorbing passive mode (100), wherein data transfer (25, 25') can be carried out by damping of a received energy, and
- an energy emitting active mode (110), wherein damping of an energy emitted by the communication means (20) in the external data device (30, 30') results in a transfer of data (25, 25') to the communication means (20).

5. The mobile identification transmitter (10) according to one of the preceding claims,
**characterized in that**
the communication means (20) comprises an energy emitting transmitting mode (120) for receiving and transmitting data.

6. The mobile identification transmitter (10) according to claim 4 or 5,
**characterized in that**
the data transfer (25, 25') can be carried out with the external data device (30, 30') in the passive mode (100) and/or the active mode (110) and/or the transmitting mode.

7. The mobile identification transmitter (10) according to one of the preceding claims,
**characterized in that**
the communication means (20) operates within a frequency range f that is between 10 MHz ≤ f ≤ 15 MHz, particularly that the communication means (20) operates within a frequency range f about 13.56 MHz.

8. The mobile identification transmitter (10) according to one of the preceding claims,
**characterized in that**
the transmitting and receiving unit (13) enables a transfer of information with the connection unit (42) on the motor vehicle up to a range of 300 m preferably up to 200 m.

9. The mobile identification transmitter (10) according to one of the preceding claims,
**characterized in that**
the communication means (20) is blocked during activation of the transmitting and receiving unit (13), and/or
the transmitting and receiving unit (13) is blocked during activation of the communication means (20).

10. The mobile identification transmitter (10) according to one of the preceding claims,
**characterized in that**
the switch element is arranged in the electronic unit (12) and/or in the housing (11) and/or on the housing (11).

11. The mobile identification transmitter (10) according to one of the preceding claims,
**characterized in that**
the mobile identification transmitter (10) comprises a display, wherein the data transfer (25, 25') and/or information relating to the data transfer (25, 25') can be displayed in particular by means of the display, wherein in particular the display used at least one of the following means: a light emitting diode (LED), an organic light emitting diode (OLED), a liquid crystal display (LCD), a plasma screen, a cathode ray tube, a Surface Conduction Electron Emitter Display (SED), or a field emission display (FED).

12. The mobile identification transmitter (10) according to one of the preceding claims,
**characterized in that**
the electronics unit (12) and/or the transmitting and receiving unit (13) and/or the communication means (20) comprise(s) at least one of the following technologies: wireless LAN (IEEE 802.11), FireWire (IEEE 1394), USB (Universal Serial Bus), IrDA (Infrared Data Association), Bluetooth, Unilink, bidirectional radio link, Near Field Communication (NFC), inductive transmission, SPI, I2C, UART serial link, or wireless USB interface.

13. The mobile identification transmitter (10) according to one of the preceding claims,
**characterized in that**
a data connection to the Internet can be established via the communication means (20).

## Revendications

1. Transmetteur d'identification mobile (10) d'un système de sécurité pour une activation sans clé d'un dispositif de fermeture (43) d'un véhicule automobile (40), comprenant un boîtier (11) dans lequel est disposée une unité électronique (12) comprenant au moins une unité d'émission et de réception (13),
l'unité d'émission et de réception (13) étant en liaison au moyen d'ondes électromagnétiques avec une unité de connexion côté véhicule automobile par une première liaison de communication (42) à l'aide de laquelle un contrôle d'identification servant à déterminer l'autorisation d'un utilisateur est réalisable,
l'unité électronique (12) présentant un moyen de communication (20),
pour permettre un transfert de données par une deuxième liaison de communication (25, 25') au moyen d'ondes électromagnétiques avec un terminal de données externe (30, 30') exclusivement jusqu'à une portée maximale de 10 cm,
le moyen de communication (20) travaillant selon une norme NFC,
**caractérisé en ce**
**que** le transmetteur d'identification mobile (10) présente un élément de commutation, lequel élément de commutation permet d'activer et/ou de bloquer alternativement l'unité d'émission et de réception (13) ou le moyen de communication (20).

2. Transmetteur d'identification mobile (10) selon la revendication 1,
**caractérisé en ce**
**que** le moyen de communication (20) présente un moyen d'émission (21) et un moyen de réception (22).

3. Transmetteur d'identification mobile (10) selon une des revendications précédentes,
**caractérisé en ce**
**que** le transfert de données (25, 25') comporte une réception et/ou une émission de données uni- et/ou bidirectionnelle.

4. Transmetteur d'identification mobile (10) selon une des revendications précédentes,
**caractérisé en ce**
**que** le moyen de communication (20)
- présente un mode passif absorbeur d'énergie (100), dans lequel un transfert de données (25, 25') est réalisable par un amortissement d'une énergie reçue, et
- présente un mode actif émetteur d'énergie (110), dans lequel un amortissement d'une énergie émise par le moyen de communication (20) dans le terminal de données externe (30, 30') entraîne un transfert de données (25, 25') au moyen de communication (20).

5. Transmetteur d'identification mobile (10) selon une des revendications précédentes,
**caractérisé en ce**
**que** le moyen de communication (20) présente un mode d'émission émetteur d'énergie (120) pour la réception et l'émission de données.

6. Transmetteur d'identification mobile (10) selon la revendication 4 ou 5,
**caractérisé en ce**
**que** le transfert de données (25, 25') avec le terminal de données externe (30, 30') est réalisable dans le mode passif (100) et/ou le mode actif (110) et/ou le mode d'émission.

7. Transmetteur d'identification mobile (10) selon une des revendications précédentes,
**caractérisé en ce**
**que** le moyen de communication (20) travaille dans une gamme de fréquences f qui est comprise entre 10 MHz ≤ f ≤ 15 MHz, en particulier que le moyen de communication (20) travaille dans une gamme de fréquences f centrée autour de 13,56 MHz.

8. Transmetteur d'identification mobile (10) selon une des revendications précédentes,
**caractérisé en ce**
**que** l'unité d'émission et de réception (13) permet un transfert d'informations avec l'unité de connexion côté véhicule automobile (42) jusqu'à une portée maximale de 300 m, de préférence une portée maximale de 200 m.

9. Transmetteur d'identification mobile (10) selon une des revendications précédentes,
**caractérisé en ce**
**que** lors d'une activation de l'unité d'émission et de réception (13), le moyen de communication (20) est bloqué et/ou
**que** lors d'une activation du moyen de communication (20), l'unité d'émission et de réception (13) est bloquée.

10. Transmetteur d'identification mobile (10) selon une des revendications précédentes,
**caractérisé en ce**
**que** l'élément de commutation est disposé dans l'unité électronique (12) et/ou dans le boîtier (11) et/ou sur le boîtier (11).

11. Transmetteur d'identification mobile (10) selon une des revendications précédentes,
**caractérisé en ce**
**que** le transmetteur d'identification mobile (10) présente un écran, lequel écran permet en particulier d'afficher le transfert de données (25, 25') et/ou une information qui concerne le transfert de données (25, 25'),
l'écran utilisant au moins un des moyens suivants : une diode électroluminescente (LED), une diode électroluminescente organique (OLED), un afficheur à cristaux liquides (LCD), un écran plasma, un tube cathodique, un écran Surface-Conduction Electron-Emitter Display (SED) ou un écran à émission de champ (FED).

12. Transmetteur d'identification mobile (10) selon une des revendications précédentes,
**caractérisé en ce**
**que** l'unité électronique (12) et/ou l'unité d'émission et de réception (13) et/ou le moyen de communication (20) présentent au moins une des technologies suivantes : Wireless LAN (IEEE 802.11), FireWire (IEEE 1394), USB (Universal Serial Bus), IrDA (Infrared Data Association), Bluetooth, Unilink, liaison radio bidirectionnelle, Near Field Communication (NFC), transmission par induction, SPI, I2C, UART serial link ou interface USB sans fil.

13. Transmetteur d'identification mobile (10) selon une des revendications précédentes,
**caractérisé en ce**
**que** le moyen de communication (20) permet d'établir une liaison de données avec Internet.
